(19) Europäisches Patentamt

European Patent Office

Office européen des brevets

(11) **EP 1 006 382 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.$^7$: **G02B 6/42**, G02B 27/09

(21) Anmeldenummer: **99120248.2**

(22) Anmeldetag: **11.10.1999**

(54) **Anordnung und Vorrichtung zur optischen Strahltransformation**

Apparatus and device for optically converting a light beam

Ensemble et dispositif de conversion optique d'un faisceau lumineux

(84) Benannte Vertragsstaaten:
**CH DE FR GB LI NL**

(30) Priorität: **30.10.1998 DE 19850287**
**04.05.1999 DE 19920293**

(43) Veröffentlichungstag der Anmeldung:
**07.06.2000 Patentblatt 2000/23**

(73) Patentinhaber:
• **Lissotschenko, Vitalij**
**44149 Dortmund (DE)**
• **Hentze, Joachim**
**59457 Werl (DE)**

(72) Erfinder:
• **Lissotschenko, Vitalij Dr.**
**44149 Dortmund (DE)**
• **Mikhailov, Alexei**
**44227 Dortmund (DE)**

(74) Vertreter: **Basfeld, Rainer, Dr. Dipl.-Phys. et al**
**Patentanwaltskanzlei Fritz**
**Patent- und Rechtsanwälte**
**Ostentor 9**
**59757 Arnsberg-Herdringen (DE)**

(56) Entgegenhaltungen:
WO-A-96/04584     WO-A-96/04701
US-A- 5 168 401     US-A- 5 513 201

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine Anordnung und eine Vorrichtung zur optischen Strahltransformation gemäß den Oberbegriffen der Ansprüche 1 und 4.

Eine Anordnung und eine Vorrichtung der eingangs genannten Art sind aus der US-Patentschrift US 5513201 A bekannt. Darin ist eine Vorrichtung zur optischen Strahltransformation beschrieben, die aus einem Array von nebeneinander und parallel zueinander angeordneten Zylinderlinsen sowohl auf der Eintritts- als auch auf der Austrittsfläche des Arrays besteht. Die Zylinderlinsen sind gegenüber der Längserstreckung der Vorrichtung um einen Winkel von 45° geneigt. Die Vorrichtung dient insbesondere dazu, die Vielzahl von Lichtstrahlen, die von einem Laserdiodenbarren ausgehen, jeweils einzeln in einem der Zylinderlinsensegmente um 90° im jeweils gleichen Drehsinn für jeden der Lichtstrahlen zu drehen.

Eine weitere Anordnung und eine weitere Vorrichtung zur optischen Strahltransformation sind aus der europäischen Patentschrift EP 0 484 276 B1 bekannt. Bei der darin beschriebenen Anordnung wird das Licht von mehreren in einer Reihe angeordneten Diodenlasern auf die Stirnseite einer Lichtleitfaser fokussiert. Anstelle mehrerer Diodenlaser kann auch das Licht eines Laserdiodenbarrens mit mehreren in einer Reihe liegenden linienförmigen emittierenden Abschnitten auf die Stirnseite der Lichtleitfaser abgebildet werden. Als Vorrichtung zur optischen Strahltransformation wird in der genannten Patentschrift pro Teilstrahl eines der Diodenlaser ein Abbé-König-Prisma verwendet. Jeder dieser Lichtstrahlen mit im wesentlichen linienförmigem Querschnitt wird in einem jeden dieser Abbé-König-Prismen um etwa 90° gedreht. Eine derartige Drehung von Lichtstrahlen, die von in einer Reihe liegenden linienförmigen Lichtquellen ausgehen, erweist sich insbesondere deshalb als sinnvoll, weil aufgrund der Divergenz der einzelnen Teilstrahlen in Linienrichtung eine Vermischung der einzelnen Teilstrahlen erfolgen kann, die eine effektive Abbildung der Teilstrahlen auf die Stirnseite der Lichtleitfaser mit einfachen Mitteln unmöglich macht. Die Verwendung eines Abbé-König-Prismas zur Drehung der einzelnen Teilstrahlen erweist sich jedoch als nachteilig, da es sich bei dem Abbé-König-Prisma um ein zum einen sehr kompliziert aufgebautes teures optisches Bauteil handelt. Zum andern müssen die einzelnen Teilstrahlen voneinander separiert in eine ganze Vielzahl von nebeneinander liegenden voneinander separierten Abbé-König-Prismen eingeleitet werden. Aufgrund der notwendigen Aufspaltung in einzelne Teilstrahlen oder Teilstrahlenbündel kann mit der vorbekannten Vorrichtung das Licht einer flächenförmigen Lichtquelle nicht effektiv in einen vorgegebenen Raumbereich abgebildet, bzw. insbesondere nicht oder nur sehr unvollständig abschnitts- oder segmentweise gedreht werden.

Das der vorliegenden Erfindung zugrundeliegende Problem ist die Schaffung einer Anordnung zur optischen Strahltransformation der eingangs genannten Art sowie einer Vorrichtung zur optischen Strahltransformation der eingangs genannten Art, die effektiver angewendet werden können.

Dies wird erfindungsgemäß durch eine Anordnung mit den Merkmalen des Anspruchs 1 und eine Vorrichtung mit den Merkmalen des Anspruchs 4 erzielt.

Dabei weist die mindestens eine Eintrittsfläche und/oder die mindestens eine Austrittsfläche der Vorrichtung zur optischen Strahltransformation mindestens ein Zylinderlinsensegment auf. Mit einer derartigen Vorrichtung kann das von punktförmigen, punktgruppenförmigen, linienförmigen oder flächenförmigen Lichtquellen ausgesandte Licht gedreht, insbesondere segmentweise gedreht werden.

Bei einer erfindungsgemäßen Anordnung ist die Zylinderachse dieses mindestens einen Zylinderlinsensegments gegenüber der Längsrichtung eines im wesentlichen linienförmigen oder vorzugsweise rechteckförmigen Querschnitts eines einfallenden Lichtstrahls innerhalb der Ebene der Eintritts- und/oder Austrittsfläche unter einem Winkel von etwa 45° geneigt. Insbesondere bei einer Neigung der Zylinderachse um etwa 45° wird der einfallende Lichtstrahl komplett oder segmentweise um etwa 90° gedreht. Die mindestens eine Eintritts- und/oder Austrittsfläche weist eine im wesentlichen langgestreckte, vorzugsweise rechteckige Form auf, wobei dann die Zylinderachse des mindestens einen Zylinderlinsensegments innerhalb dieser Fläche gegenüber der Längsrichtung der Fläche unter einem Winkel von 45° geneigt ist.

Vorteilhafterweise weisen sowohl die mindestens eine Eintritts- als auch die mindestens eine Austrittsfläche Zylinderlinsensegmente auf, die in der mittleren Ausbreitungsrichtung der auf die Vorrichtung einfallenden Lichtstrahlen einander gegenüberliegend angeordnet sind.

Erfindungsgemäß sind die mindestens eine Eintrittsfläche und/oder die mindestens eine Austrittsfläche mit einer Anzahl von nebeneinander und jeweils benachbart senkrecht zueinander angeordneten Zylinderlinsensegmenten versehen, die vorzugsweise jeweils die gleiche Brennweite aufweisen. Falls das Licht einer flächig ausgedehnten Lichtquelle auf zwei benachbarte Zylinderlinsensegmente auftrifft, die senkrecht zueinander orientiert sind, werden die jeweiligen auf diese Segmente auftreffenden Abschnitte des Lichtstrahls beim Durchgang durch die Vorrichtung um +90° bzw. um -90° gedreht. Dabei werden die auf benachbarte senkrecht zueinander orientierte Zylinderlinsensegmente auftreffenden Abschnitte des Lichtstrahls bei entsprechend bevorzugter Wahl des Drehpunkts derart aneinander herangeklappt, daß zwischen ihnen nach dem Durchtritt durch die Vorrichtung kein Abstand mehr verbleibt. Hierbei wird insbesondere die Ausdehnung des flächenförmigen auftreffenden Lichtstrahls in einer Richtung halbiert sowie in der anderen Richtung verdoppelt. Insbesondere bei in einer Richtung stärker als in der anderen Richtung ausgedehnten Lichtquellen findet hierbei eine Symmetrisierung des Strahlparameterproduktes statt. Damit ist diese Ausführungsform insbesondere für die Fokussierung des aus einer Multimodelaserdiode austretenden Lichts auf eine Lichtleitfaser geeignet.

Gemäß einer bevorzugten Ausführungsform der vorliegenden Erfindung ist die Vorrichtung als im wesentlichen quaderförmiger Körper ausgeführt mit jeweils einer zueinander parallen Eintritts- und Austrittsfläche, wobei deren Abstand zueinander vorzugsweise der doppelten Brennweite der Zylinderlinsensegmente entspricht. Durch die parallele Anordnung von Eintritts- und Austrittsfläche wird gewährleistet, daß Lichtstrahlen nach dem Durchgang durch die Vorrichtung ihre Richtung beibehalten. Durch die Wahl des Abstands der Eintritts- und Austrittsfläche gleich der doppelten Brennweite der Zylinderlinsensegmente wird gewährleistet, daß Lichtstrahlen beim Durchgang durch die Vorrichtung nur eine Drehung, nicht jedoch eine Fokussierung oder Aufweitung erfahren.

Gemäß einer alternativen bevorzugten Ausführungsform der vorliegenden Erfindung besteht die Vorrichtung aus zwei im wesentlichen quaderförmigen Körpern, die jeweils eine Eintrittsfläche und eine dazu parallele Austrittsfläche umfassen, deren Abstand zueinander vorzugsweise kleiner als die einfache Brennweite der Zylinderlinsensegmente ist. Diese beiden quaderförmigen Körper sind vorzugsweise so zueinander angeordnet, daß die durch jeweils in einem Körper gegenüberliegenden Zylinderlinsensegmente gebildeten Zylinderlinsen zwischen den quaderförmigen Körpern eine gemeinsame Brennebene aufweisen. Auf diese Weise wird zum einen auch gewährleistet, daß durch die Vorrichtung hindurchtretende Lichtstrahlen nur gedreht, nicht jedoch fokussiert oder aufgeweitet werden. Weiterhin können aufgrund der Fokussierung der durch die Vorrichtung hindurchtretenden Lichtstrahlen in der zwischen den quaderförmigen Körpern angeordneten gemeinsamen Brennebene auch Lichtquellen mit einer größeren Divergenz in einer Richtung oder Lichtquellen mit in einer Richtung nahe beieinander liegenden emittierenden Abschnitten effektiver gehandhabt werden, so daß die Verluste bei der Abbildung beispielsweise auf die Stirnfläche einer Lichtleitfaser verringert werden können.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Dabei zeigen

Fig. 1a eine Draufsicht auf eine erfindungsgemäße Anordnung zur optischen Strahltransformation;

Fig. 1b eine Seitenansicht der Anordnung gemäß Fig. 1a;

Fig. 2a eine perspektivische Ansicht einer Vorrichtung zur optischen Strahltransformation;

Fig. 2b einen schematischen Schnitt längs der Linie IIb-IIb in Fig. 2a;

Fig. 3 eine perspektivische Ansicht einer Vorrichtung zur optischen Strahltransformation mit drei beispielhaften Strahlbündeln;

Fig. 4a eine schematische Ansicht einer weiteren Ausführungsform einer Vorrichtung zur optischen Strahltransformation;

Fig. 4b einen schematischen Schnitt längs der Linie IVb-IVb in Fig. 4a;

Fig. 5a eine Draufsicht auf die Eintrittsfläche einer Vorrichtung, auf die das Licht einer flächenförmigen Lichtquelle auftrifft;

Fig. 5b eine Draufsicht auf die Austrittsfläche der Vorrichtung gemäß Fig. 5a;

Fig. 5c eine Ausschnittsvergrößerung gemäß dem Kreis Vc in Fig. 5b;

Fig. 6a eine Draufsicht auf die Eintrittsfläche einer Ausführungsform einer erfindungsgemäßen Vorrichtung, auf die das Licht einer flächenförmigen Lichtquelle auftrifft;

Fig. 6b eine Draufsicht auf die Austrittsfläche der Vorrichtung gemäß Fig. 6a.

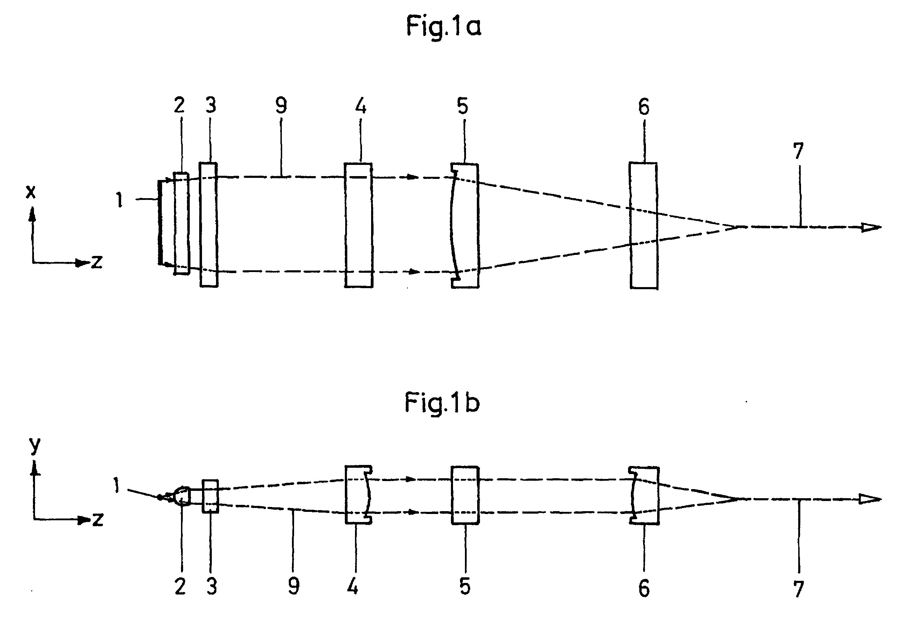

Die Fig. 1 abgebildete Anordnung zur optischen Strahltransformation umfaßt eine als Laserdiodenbarren ausgeführte Lichtquelle 1, die eine im wesentlichen linienförmige Lichtquelle darstellt. Anstelle einer linienförmigen Lichtquelle kann auch eine punktförmige Lichtquelle oder eine aus Gruppen von Punktquellen bestehende Lichtquelle oder eine flächenförmige Lichtquelle mit beliebiger Winkelverteilung Verwendung finden. In Fig. 1a und Fig. 1b sind zur besseren Orientierung Koordinatenachsen x, y, z eingezeichnet. Die Lichtquelle 1 erstreckt sich beispielhaft im wesentlichen in x-Richtung, in der sie beispielsweise eine Ausdehnung von 10 mm aufweist. Demgegenüber ist die Ausdehnung der Lichtquelle 1 in y-Richtung etwa ein Mikrometer. Das von der Lichtquelle 1 ausgesendete Licht weist in Richtung der y-Achse eine wesentlich größere Divergenz auf als in Richtung der x-Achse. Die Divergenz in y-Richtung beträgt etwa 0,5 rad, wohingegen die Divergenz in x-Richtung etwa 0,1 rad beträgt. Weiterhin ist eine beispielsweise als Laserdiodenbarren ausgeführte Lichtquelle 1 in x-Richtung in mehrere emittierende Abschnitte, beispielsweise in 20 - 25 Abschnitte in seiner Längsrichtung unterteilt.

Das von der Lichtquelle 1 ausgehende Licht wird in einer Zylinderlinse 2, die sich im wesentlichen in x-Richtung erstreckt, derart beugungsbegrenzt kollimiert, daß die Divergenz in y-Richtung nur noch 0,005 rad beträgt, so daß das Licht 9 hinter der Zylinderlinse 2 im wesentlichen parallel bezüglich der y-Achse verläuft.

In der im nachfolgenden noch näher zu beschreibenden Vorrichtung 3 zur optischen Strahltransformation wird das einfallende Licht 9 um einen Winkel von 90° rotiert, so daß nach dem Austritt aus der Vorrichtung 3 die Divergenz in y-Richtung etwa 0,1 rad und die Divergenz in x-Richtung etwa 0,005 rad beträgt. Ein derartiger in x-Richtung nur unwesentlich divergenter und in y-Richtung moderat divergenter Lichtstrahl kann durch die beispielsweise als Zylinderlinsen ausgeführten Fokussierungselemente 4, 5, 6 problemlos auf das Ende einer Lichtleitfaser 7 fokussiert und in diese eingekoppelt werden.

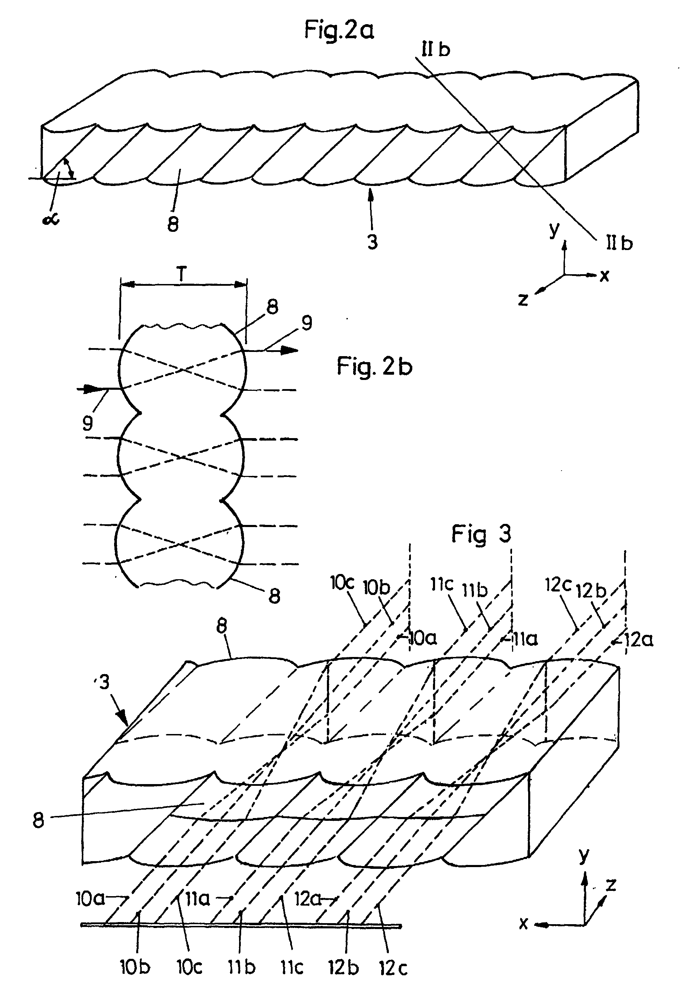

Aus Fig. 2 ist eine Ausführungsform einer Vorrichtung 3 zur optischen Strahltransformation ersichtlich. Es handelt sich um einen im wesentlichen quaderförmigen Block aus einem transparentem Material, auf dem sowohl auf der Eintrittsseite als auch auf der Austrittsseite eine ganze Anzahl von Zylinderlinsensegmenten 8 parallel zueinander angeordnet sind. Die Achsen der Zylinderlinsensegmente 8 schließen mit der Basisseite der quaderförmigen Vorrichtung 3, die in x-Richtung verläuft, einen Winkel $\alpha$ von 45° ein. In dem abgebildeten Ausführungsbeispiel sind etwa zehn Zylinderlinsensegmente nebeneinander auf jeder der beiden x-y-Flächen der Vorrichtung 3 angeordnet. Aus Fig. 2b ist ersichtlich, daß die in z-Richtung gemessene Tiefe T der durch das Zylinderlinsenarray gebildeten Bikonvex-Zylinderlinsen gleich der zweifachen Brennweite einer jeder dieser Bikonvex-Zylinderlinsen ist. Dies entspricht

$$T=2F_n \ .$$

Hierbei ist T die Tiefe der als Zylinderlinsenarray ausgeführten Vorrichtung 3 zur optischen Strahltransformation und $F_n$ die Brennweite einer jeden der Bikonvex-Zylinderlinsen bei einem Brechungsindex n des gewählten Materials der Vorrichtung 3. Aus Fig. 2b ist ein schematischer Strahlengang 9 ersichtlich, der verdeutlicht, daß eine jede der Bikonvex-Zylinderlinsen einen parallelen Lichtstrahl wiederum in einen parallelen Lichtstrahl überführt.

Aus Fig. 3 ist der Durchgang eines linienförmig auf die Vorrichtung 3 auftreffenden Lichtstrahls durch eine erfindungsgemäße Vorrichtung 3 am Beispiel von Teilstrahlen 10a, b, c, 11a b c, 12a, b, c ersichtlich. Die Teilstrahlen 10, 11, 12 sind zur Vereinfachung so dargestellt, als ob der Lichtstrahl nur eine Ausdehnung in x-Richtung aufweist. Die Vorrichtung 3 ist gemäß der Anordnung in Fig. 1 gegenüberliegend den Teilstrahlen ausgerichtet, d.h. die optisch funktionalen mit den Zylinderlinsensegmenten 8 versehenen Flächen sind x-y-Flächen.

Aus Fig. 3 ist ersichtlich, daß die Teilstrahlen 10, 11, 12 beim Durchgang durch die Vorrichtung 3 eine Drehung um 90° erfahren, so daß die einzelnen Teilstrahlen 10, 11, 12 nach dem Durchgang durch die Vorrichtung 3 jeweils nur noch in y-Richtung ausgedehnt sind. Hierbei verläuft beispielsweise der Lichtstrahl 10b ungehindert durch die Vorrichtung 3 hindurch, wohingegen der links von ihm auf die Eintrittsfläche auftreffende Lichtstrahl 10a zur Mitte und nach unten hin abgelenkt wird und der auf die Eintrittsfläche rechts von ihm auftretende Lichtstrahl 10c zur Mitte und nach oben hin abgelenkt wird. Gleiches gilt für die Teilstrahlen 11 und 12. Auf diese Weise wird verhindert, daß die beispielsweise aus einzelnen Abschnitten der Lichtquelle 1 hervorgehenden Teilstrahlen 10, 11, 12 aufgrund der vor der Vorrichtung 3 unter Umständen relativ starken Divergenz in x-Richtung einander überlappen, da nach dem Durchgang durch die Vorrichtung 3 nur noch eine beugungsbegrenzte Restdivergenz in x-Richtung vorhanden ist, wohingegen die Divergenz in y-Richtung der ursprünglichen Divergenz in x-Richtung von beispielsweise etwa 0,1 rad entspricht.

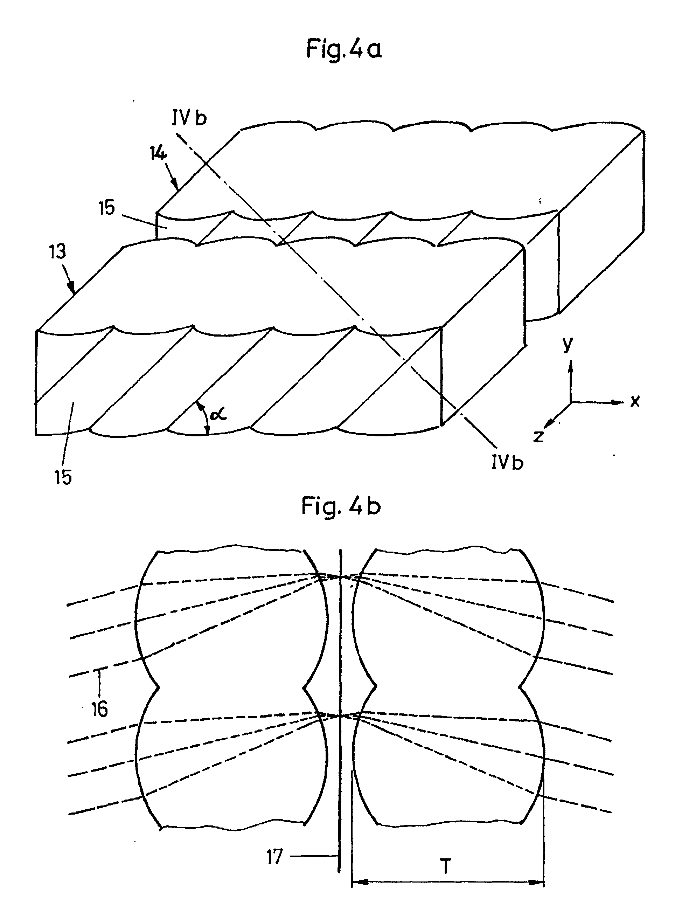

In Fig. 4 ist ein weiteres Ausführungsbeispiel einer Vorrichtung zur optischen Strahltransformation abgebildet. Hier werden anstelle eines Zylinderlinsenarrays zwei Zylinderlinsenarrays 13, 14 verwendet, bei denen ebenfalls jeweils die x-y-Flächen mit einem Array von unter einem Winkel von 45° angeordneten Zylinderlinsensegmenten 15 versehen sind. Aus Fig. 4b ist jedoch ersichtlich, daß diese Zylinderlinsenarrays 13, 14 eine geringere Tiefe T aufweisen, wobei die Tiefe des einzelnen Zylinderlinsenarrays 13, 14 hier kleiner als die einfache Brennweite $F_n$ gewählt werden kann. Dies wird durch die schematische Zeichnung Fig. 4b verdeutlicht. Hier wird gezeigt, daß jedes der Zylinderlinsenarrays 13, 14 eine Anzahl von Bikonvex-Zylinderlinsen aufweist, die jeweils identische Brennweiten haben, so daß von rechts oder von links einfallende Parallelstrahlbündel auf eine zwischen den Zylinderlinsenarrays 13, 14 angeordnete gemeinsame Brennebene 17 fokussiert werden. Aufgrund der Tatsache, daß die in das zweite Zylinderlinsenarray 14 einfallenden Lichtstrahlen von einem auf der gemeinsamen Brennebene 17 liegenden Fokuspunkt ausgehen erhöht sich die Effizienz der Strahltransformationen, weil die Abmessung der in der Brennebene 17 gelegenen Lichtquelle kleiner ist als die Abmessung des auf die Eintrittsfläche des Zylinderlinsenarrays 13 von der Zylinderlinse 2 einfallenden Strahlenbündels. Mit einer derartigen Vorrichtung zur optischen Strahltransformation können auch Lichtquellen mit einer größeren Divergenz oder Lichtquellen mit in x-Richtung näher beieinander liegenden emittierenden Abschnitten oder linien- oder flächenförmige Lichtquellen effektiver gehandhabt werden, so daß die Verluste verringert werden können.

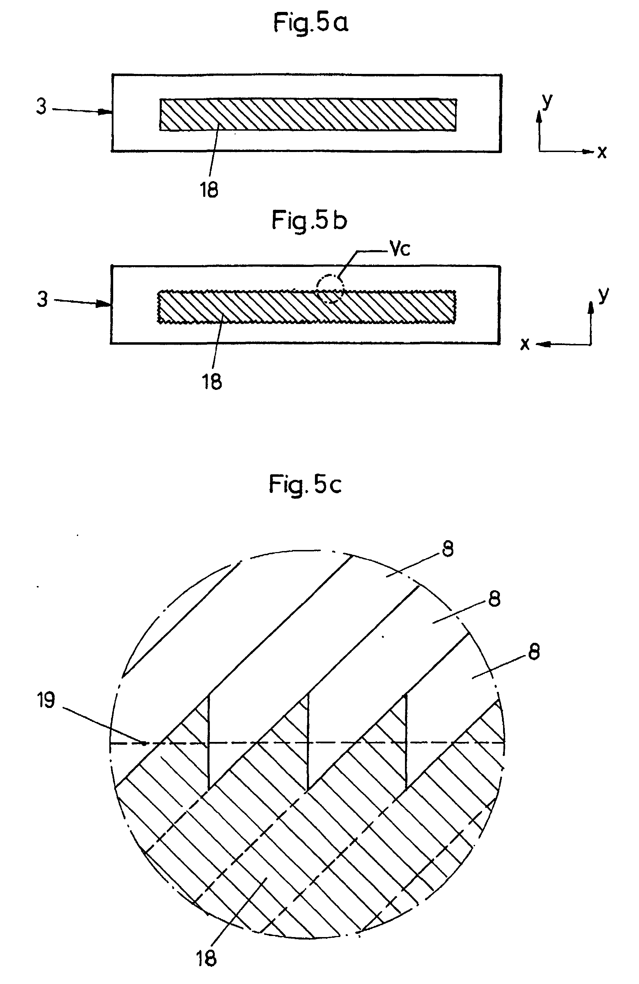

Aus Fig. 5 ist der Durchgang eines flächenförmig auf die Vorrichtung 3 auftreffenden Lichtstrahls 18 durch eine Vorrichtung 3 ersichtlich. Aus Fig. 5a ist das Auftreffen des flächenförmigen Lichtstrahls 18 auf die eintrittsseitige x-y-Fläche der Vorrichtung 3 ersichtlich, wohingegen aus Fig. 5b der Austritt des flächenförmigen Lichtstrahls aus der austrittsseitigen x-y-Fläche der Vorrichtung 3 ersichtlich ist. Wie aus der Detailvergrößerung in Fig. 5c ersichtlich ist, wird der Lichtstrahl 18 beim Durchgang durch die Vorrichtung 3 segmentweise um 90° gedreht bzw. an Linien senkrecht zu den Zylinderachsen der Zylinderlinsensegmente 8 gespiegelt. Die in Fig. 5c gestrichelt dargestellte Linie 19 verdeutlicht die Randbegrenzung des eingangsseitig einfallenden flächenförmigen Lichtstrahls 18, wohingegen die durchgezogenen Linien die ausgangsseitig ausfallende Kontur des flächenförmigen Lichtstrahls 18 wiedergibt. Bei entsprechend feiner Segmentierung der Vorrichtung 3 durch Zylinderlinsensegmente 8 ergibt sich aufgrund des Durchgangs durch die Vorrichtung 3 nur eine leichte Ausfransung der Fläche des einfallenden flächenförmigen Lichtstrahls 18 an seinen Rändern. Trotzdem ist die gesamte Fläche des flächenförmigen Lichtstrahls 18 segmentweise gedreht bzw. an Linien senkrecht zu den Zylinderachsen der Zylinderlinsensegmente 8 gespiegelt.

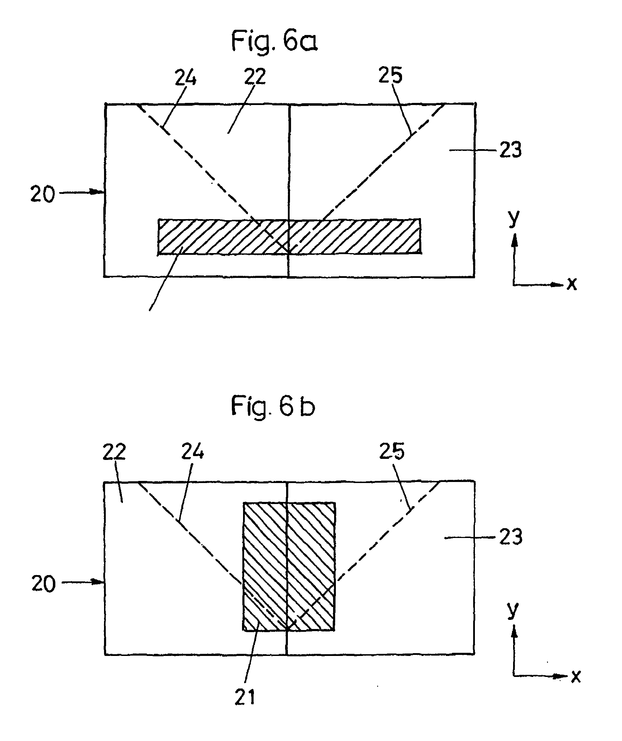

Aus Fig. 6 ist eine Ausführungsform einer erfindungsgemäßen Vorrichtung 20 zur optischen Strahltransformation ersichtlich. Fig. 6a zeigt die eintrittsseitige x-y-Fläche der Vorrichtung 20, auf die ein flächenförmiger Lichtstrahl 21 auftrifft. Die auf der eintrittsseitigen x-y-Fläche der Vorrichtung 20 angeordneten Zylinderlinsensegmente 22, 23 sind nicht wie bei der vorher beschriebenen Vorrichtung 3 parallel zueinander sondern senkrecht zueinander angeordnet. In Fig. 6a und Fig. 6b sind jeweils die Scheitellinien 24, 25 der Zylinderlinsensegmente 22, 23 gestrichelt dargestellt. Es besteht auch die Möglichkeit, die Zylinderlinsensegmente 22, 23 unter einem anderen als einem rechten Winkel zueinandner anzuordnen.

Wie bei der Vorrichtung 3 gemäß Fig. 2 schließt die Achse des in Fig. 6a rechts abgebildeten Zylinderlinsensegments 23 mit der in x-Richtung verlaufenden Basisseite der beispielsweise quaderförmigen Vorrichtung 20 einen Winkel α von 45° ein. Bei dem in Fig. 6a links abgebildeten Zylinderlinsensegment 22 schließt die Achse des Zylinderlinsensegments 22 mit der in x-Richtung verlaufenden Basisseite der beispielsweise quaderförmigen Vorrichtung 20 einen Winkel α von -45° ein.

Aus Fig. 6b ist ersichtlich, daß sich die Kontur des Lichtstrahls 21 beim Durchgang durch die Vorrichtung 20 geändert hat. Bei dem in Fig. 6 links abgebildeten Zylinderlinsensegment 22 wird der auf dieses Zylinderlinsensegment 22 auftreffende Teil des Lichtstrahls 21 um +90° gedreht, wohingegen der auf das Zylinderlinsensegment 23 auftreffende Lichtstrahl um -90° gedreht wird. Das hat zur Folge, daß aus einem vor dem Durchgang durch die Vorrichtung 20 in einer Richtung, nämlich in x-Richtung, relativ ausgedehnten und in einer anderen Richtung, nämlich in y-Richtung relativ schmalen Lichtstrahl 21 ein in einer Richtung, nämlich in y-Richtung halb so ausgedehnter Lichtstrahl wie vorher in x-Richtung und in der anderen Richtung, nämlich in x-Richtung ein doppelt so breiter Lichtstrahl wie vorher in y-Richtung heraustritt. Im Gegensatz zu der in Fig. 2 abgebildeten Ausführungsform, bei der gemäß Fig. 3 eine Separation der um 90° gedrehten Lichtstrahlen 10, 11, 12 stattfindet, werden die einzelnen auf unterschiedliche Zylinderlinsensegmente 22, 23 auftreffenden Abschnitte des Lichtstrahls 21 zusammengeklappt, so daß zwischen den auf einzelne Zylinderlinsensegmente 22, 23 auftreffenden Abschnitten nach dem Durchtritt durch die Vorrichtung 20 kein Abstand in x-Richtung vorhanden ist. Hiermit ist die Vorrichtung 20 insbesondere geeignet, Multimodelaserdioden auf beispielsweise 20 μm durchmessende Lichtleitfasern zu fokussieren.

Bei der Vorrichtung 20 gemäß Fig. 6 kann durch willkürliche Verschiebung des Schnittpunkts der beiden Scheitellinien 24, 25 längs der y-Richtung der Drehpunkt, um den herum die einzelnen Abschnitte des Lichtstrahls 21 gedreht werden, frei gewählt werden.

## Patentansprüche

1. Anordnung zur optischen Strahltransformation, die zur Abbildung einer Lichtquelle (1) oder mehrerer Lichtquellen auf die Stirnseite einer Lichtleitfaser (7) dienen kann, umfassend mindestens eine Lichtquelle (1), die mindestens einen Lichtstrahl (9, 21) aussenden kann, sowie weiterhin umfassend ein Abbildungselement (2) und mindestens eine Vorrichtung (3, 20) zur optischen Strahltransformation, wobei das Abbildungselement (2) den von der mindestens einen Lichtquelle ausgesandten mindestens einen Lichtstrahl (9, 21) auf die mindestens eine Vorrichtung (3) zur optischen Strahltransformation abbilden kann, wobei der mindestens eine Lichtstrahl durch diese zumindest teilweise hindurchtreten kann, wobei die mindestens eine Vorrichtung (3, 20) zur optischen Strahltransformation den durch sie hindurchtretenden mindestens einen Lichtstrahl (9, 21) zumindest abschnittsweise um die Ausbreitungsrichtung (z) des jeweiligen Abschnitts des Lichtstrahls (9, 21) oder der Lichtstrahlen herum um einen Winkel von etwa 90° drehen kann, wobei die Vorrichtung (3, 20) zur optischen Strahltransformation auf einer Eintritts- und/oder Austrittsfläche des oder der Lichtstrahlen (9, 21) mindestens ein Zylinderlinsensegment (22, 23) aufweist, wobei der mindestens eine auf die Vorrichtung (3, 20) auftreffende Lichtstrahl (9, 21) einen linienförmigen oder rechteckförmigen Querschnitt aufweist und wobei die Zylinderachse des mindestens einen Zylinderlinsensegments (22, 23) gegenüber der Längsrichtung des linien- oder rechteckförmigen Querschnitts des mindestens einen einfallenden Lichtstrahls (9, 21) innerhalb der Ebene (x-y) der Eintritts- bzw. Austrittsfläche unter einem Winkel ($\alpha$) von etwa 45° und/oder -45° geneigt ist, **dadurch gekennzeichnet, daß** die mindestens eine Eintrittsfläche und/oder die mindestens eine Austrittsfläche mit einer Anzahl von nebeneinander und jeweils benachbart senkrecht zueinander angeordneten Zylinderlinsensegmenten (22,23) versehen sind.

2. Anordnung nach Anspruch 1, **dadurch gekennzeichnet, daß** die Anordnung weiterhin mindestens ein Fokussierungselement (4, 5, 6) umfaßt, mit der der mindestens eine aus der Vorrichtung (3, 20) zur optischen Strahltransformation austretende Lichtstrahl (9, 21) auf die Stirnseite einer Lichtleitfaser (7) fokussiert werden kann.

3. Anordnung nach einem der Ansprüche 1 oder 2, **dadurch gekennzeichnet, daß** das Abbildungselement (2) eine Zylinderlinse ist.

4. Vorrichtung zur optischen Strahltransformation zur Verwendung in einer Anordnung nach einem der Ansprüche 1 bis 3 mit mindestens einer Eintritts- und mindestens einer Austrittsfläche, durch die zu transformierende Lichtstrahlen (9, 21) hindurchtreten können, wobei die Vorrichtung (3, 20) zur optischen Strahltransformation die durch sie hindurchtretenden Lichtstrahlen (9, 21) zumindest abschnittsweise um die Ausbreitungsrichtung (z) des jeweiligen Abschnitts des Lichtstrahls (9, 21) oder der Lichtstrahlen herum um einen Winkel von etwa 90° drehen kann, wobei die Vorrichtung (3, 20) zur optischen Strahltransformation auf der mindestens einen Eintrittsund/oder der mindestens einen Austrittsfläche mindestens ein Zylinderlinsensegment (22, 23) aufweist, wobei die mindestens eine Eintritts- und/oder die mindestens eine Austrittsfläche der Vorrichtung (3, 20) eine im wesentlichen langgestreckte Form aufweist und wobei die Zylinderachse des mindestens einen Zylinderlinsensegments (22, 23) gegenüber der Längsrichtung der Eintritts- bzw. Austrittsfläche innerhalb der Ebene (x-y) der Eintritts- bzw. Austrittsfläche unter einem Winkel ($\alpha$) von 45° und/oder -45° geneigt ist, **dadurch gekennzeichnet, daß** die mindestens eine Eintrittsfläche und/oder die mindestens eine Austrittsfläche mit einer Anzahl von nebeneinander und jeweils benachbart senkrecht zueinander angeordneten Zylinderlinsensegmenten (22,23) versehen sind.

5. Vorrichtung nach Anspruch 4, **dadurch gekennzeichnet, daß** auf der mindestens einen Eintrittsfläche und der mindestens einen Austrittsfläche jeweils Zylinderlinsensegmente (22, 23) vorgesehen sind, die in Richtung der mittleren Ausbreitungsrichtung (z) des oder der Lichtstrahlen (9, 21) einander gegenüberliegend in der Vorrichtung (3, 20) angeordnet sind.

6. Vorrichtung nach einem der Ansprüche 4 oder 5, **dadurch gekennzeichnet, daß** die mindestens eine Eintrittsund/oder die mindestens eine Austrittsfläche der Vorrichtung (20) eine rechteckige Form aufweist.

7. Vorrichtung nach einem der Ansprüche 4 bis 6, **dadurch gekennzeichnet, daß** die nebeneinander und senkrecht zueinander angeordneten Zylinderlinsensegmente (22, 23) jeweils die gleiche Brennweite ($F_n$) aufweisen.

8. Vorrichtung nach einem der Ansprüche 4 bis 7, **dadurch gekennzeichnet, daß** die Vorrichtung (3, 20) als im wesentlichen quaderförmiger Körper ausgeführt ist mit jeweils einer zueinander parallelen Eintritts- und Austrittsfläche, wobei deren Abstand (T) zueinander vorzugsweise der doppelten Brennweite ($F_n$) der Zylinderlinsensegmente (22, 23) entspricht.

9. Vorrichtung nach einem der Ansprüche 4 bis 7, **dadurch gekennzeichnet, daß** die Vorrichtung (3, 20) aus zwei im wesentlichen quaderförmigen Körpern besteht, die jeweils eine Eintrittsfläche und eine parallel dazu ausgerichtete Austrittsfläche umfassen, deren Abstand (T) zueinander vorzugsweise kleiner als die einfache Brennweite ($F_n$) der Zylinderlinsensegmente ist.

**Claims**

1. Arrangement for the optical light ray transformation that can serve for the reproduction of one light source (1) or several light sources on the front part of an optical fibre (7), comprising at least one light source (1) that can emit at least one light ray (9, 21), as well as comprising also an image element (2) and at least one device (3, 20) for the optical light ray transformation, in which the image element (2) can reproduce at least one light ray (9, 21) emitted by at least one light source on at least one device (3) for the optical light ray transformation, in which at least one light ray can pass at least partially through the device, in which at least one device (3, 20) for the optical light ray transformation can turn at least in sections at least one light ray (9, 21) passing through it, around the direction of propagation (z) of the respective sections of the light ray (9, 21) or the light rays of an angle of about 90°, in which the device (3, 20) for the optical light ray transformation shows an entry and/or outlet surface of the light ray or the light rays (9, 21) at least a cylinder-lens segment (22, 23), in which at least one light ray (9, 21) that hits the device (3, 20) shows a line-shaped or rectangular cross section and in which the cylinder axis of at least one cylinder-lens segment (22, 23) opposite the longitudinal direction of the line-shaped or rectangular-shaped cross section of at least one incoming light ray (9, 21) inside the plane (x-y) of the entry or the outlet surface is inclined at an angle ($\alpha$) of about 45° and/or -45°, **characterized in that** at least one entry surface and/or that at least one outlet surface are provided with a number of neighbouring cylinder-lens segments (22,23) perpendicularly arranged next to each other.

2. Arrangement according to claim 1, **characterized in that** the arrangement includes, moreover, at least a focusing element (4, 5, 6), with which at least one light ray (9, 21) that comes out of the device (3, 20) can be focused for the optical light ray transformation on the front part of an optical fibre (7).

3. Arrangement according to one of the claims 1 or 2, **characterized in that** the image element (2) is a cylinder lens.

4. Device for the optical light ray transformation for the use in an arrangement according to one of the claims 1 to 3 with at least one entry surface and at least one outlet surface through which the light rays (9, 21) to be transformed can pass, in which the device (3, 20) for the optical light ray transformation can turn at least in sections the light ray (9, 21) passing through it around the extension direction (z) of the respective section of the light ray (9, 21) or the light rays at an angle of about 90°, the device (3, 20) of the optical light ray transformation showing on at least one entry and/or at least one outlet surface at least one cylinder-lens segment (22, 23), at least one entry and/or at least one outlet surface of the device (3, 20) showing a substantially long form and in which the cylinder axis of at least one cylinder-lens segment (22, 23) opposite the longitudinal direction of the entry or the outlet surface inside the plane (x-y) of the entry or the outlet surface is inclined at an angle ($\alpha$) of 45° and/or -45°, **characterized in that** at least one entry surface and/or at least one outlet surface are provided with a number of neighbouring cylinder-lens segments (22, 23) perpendicularly arranged next to each other.

5. Device according to claim 4, **characterized in that** on at least one entry surface and at least one outlet surface are provided in each case cylinder-lens segments (22, 23) that are oppositely arranged in direction of the middle image direction (z) of the light ray or the light rays (9, 21) in the device (3, 20).

6. Device according to one of the claims 4 or 5, **characterized in that** the at least one entry and/or the at least one outlet surface of the device (20) shows a rectangular form.

7. Device according to one of the claims 4 to 6, **characterized in that** the neighbouring cylinder-lens segments each perpendicularly arranged one towards the other (22, 23) show the same focal distance ($F_n$).

8. Device according to one of the claims 4 to 7, **characterized in that** the device (3, 20) is embodied as a substantially cuboid-shaped body with one entry surface and outlet surface parallel in each case one towards the other, their distance (T) one towards the other preferably corresponding to the double focal distance ($F_n$) of the cylinder-lens segments (22, 23).

9. Device according to one of the claims 4 to 7, **characterized in that** the device (3, 20) consists of two substantially cuboid-shaped bodies that include in each case one entry surface and one outlet surface parallely aligned to this, the distance (T) of which one towards the other preferably being smaller than the simple focal distance ($F_n$) of the cylinder-lens segments.

## Revendications

1. Système pour la transformation du rayon de lumière optique pouvant servir à la reproduction d'une source de lumière (1) ou plusieurs sources de lumière en la partie frontale d'une fibre optique (7), comprenant au moins une source de lumière (1) qui peut émettre au moins un rayon de lumière (9, 21), ainsi que comprenant également un élément d'image (2) et au moins un dispositif (3, 20) pour la transformation du rayon de lumière optique, dans lequel l'élément d'image (2) peut reproduire au moins un rayon de lumière (9, 21) émis par au moins une source de lumière en au moins un dispositif (3) pour la transformation du rayon de lumière optique, dans lequel un rayon de lumière peut passer au moins partiellement à travers le dispositif, dans lequel au moins un dispositif (3, 20) pour la transformation du rayon de lumière optique peut convertir en sections au moins un rayon de lumière (9, 21) passant à travers lui autour de la direction de propagation (z) des sections respectives du rayon de lumière (9, 21) ou les rayons de lumière d'un angle d'environ 90°, dans lequel le dispositif (3, 20) pour la transformation du rayon de lumière optique montre sur une surface d'entrée et/ou de sortie du rayon de lumière ou les rayons de lumière (9, 21) au moins un segment de lentille cylindrique (22, 23), dans lequel au moins un rayon de lumière (9, 21) qui frappe le dispositif (3, 20) montre une section transversale en forme linéale ou rectangulaire et dans lequel l'axe cylindrique d'au moins un segment de lentille cylindrique (22, 23) face à la direction longitudinale de la section transversale en forme linéale ou rectangulaire d'au moins un rayon de lumière d'arrivée (9, 21) dans le plan (x-y) de la surface d'entrée ou de sortie est inclinée avec un angle ($\alpha$) d'environ 45° et/ou -45°, **caractérisée en ce qu'**au moins une surface d'entrée et/ou de sortie sont pourvues d'un certain nombre de segments de lentilles cylindriques voisines (22,23) disposées perpendiculairement à côté les uns des autres.

2. Système selon la revendication 1, **caractérisé en ce que** le système inclut, entre outres, au moins un élément focalisant (4, 5, 6), avec lequel au moins un rayon de lumière (9, 21) qui sort du dispositif (3, 20) peut être focalisé pour la transformation du rayon de lumière optique en la partie frontale d'une fibre optique (7).

3. Système selon une des revendications 1 ou 2, **caractérisé en ce que** l'élément d'image (2) est une lentille cylindrique.

4. Dispositif pour la transformation du rayon de lumière optique pour l'utilisation dans un système selon une des revendications 1 à 3 avec au moins une surface d'entrée et une surface de sortie à travers lesquelles les rayons de lumière (9, 21) à être transformés peuvent passer, dans lequel le dispositif (3, 20) pour la transformation du rayon de lumière optique peut convertir en sections au moins le rayon de lumière (9, 21) passant à travers lui autour de la direction d'extension (z) de la section respective du rayon de lumière (9, 21) ou les rayons de lumière sous un angle d'environ 90°, le dispositif (3, 20) de la transformation du rayon de lumière optique montrant au moins une surface d'entrée et/ou de sortie, au moins un segment de lentille cylindrique (22, 23), au moins une surface d'entrée et/ou de sortie du dispositif (3, 20) montrant une forme substantiellement longue et dans lequel l'axe cylindrique d'au moins un segment de lentille cylindrique (22, 23) face à la direction longitudinale de la surface d'entrée ou de sortie dans le plan (x-y) de la surface d'entrée ou de sortie est inclinée à un angle ($\alpha$) de 45° et/ou -45°, **caractérisé en ce qu'**au moins une surface d'entrée et/ou de sortie est pourvue d'un certain nombre de segments de lentille cylindrique voisine (22, 23) disposés perpendiculairement à côté les uns des autres.

5. Dispositif selon la revendication 4, **caractérisé en ce qu'**au moins une surface d'entrée et au moins une surface de sortie sont pourvues respectivement des segment de lentille cylindrique (22, 23) qui sont disposés de façon opposée en direction de la direction d'image moyenne (z) du rayon de lumière ou des rayons de lumière (9, 21) dans le dispositif (3, 20).

6. Dispositif selon une des revendications 4 ou 5, **caractérisé en ce qu'**au moins une surface d'entrée et/ou de sortie du dispositif (20) présente une forme rectangulaire.

7. Dispositif selon une des revendications 4 à 6, **caractérisé en ce que** les segments de lentille cylindrique voisine disposés perpendiculairement les uns vers les autres (22, 23) présentent la même distance focale (Fn).

8. Dispositif selon une des revendications 4 à 7, **caractérisé en ce que** le dispositif (3, 20) est réalisé comme un corps substantiellement en forme cuboïdale avec une surface d'entrée et une surface de sortie parallèles respectivement les unes vers les autres, la distance (T) entre elles correspondant préférablement au double de la distance focale (Fn) des segments de la lentille cylindrique (22, 23).

9. Dispositif selon une des revendications 4 à 7, **caractérisé en ce que** le dispositif (3, 20) consiste en deux corps substantiellement en forme cuboïdale incluant respectivement une surface d'entrée et une surface de sortie alignées parallèlement à celui-ci, la distance (T) entre l'un et l'autre étant préférablement plus petite que la distance focale simple (Fn) des segments de la lentille cylindrique.

Fig.1a

Fig.1b

Fig.2a

Fig. 2b

Fig 3

Fig. 4a

Fig. 4b

## Fig.5a

3 →

18

y
x

## Fig.5b

Vc

3 →

18

y
x

## Fig.5c

8

8

8

19

18

## Fig. 6a

## Fig. 6 b